# EUROPÄISCHE PATENTSCHRIFT

(11) **EP 2 652 292 B1**
(45) Veröffentlichungstag und Bekanntmachung des Hinweises auf die Patenterteilung: **25.02.2015**
(21) Anmeldenummer: 11794176.5
(22) Anmeldetag: 13.12.2011
(51) Int. Cl.: F02D 9/10

(54) **VENTIL**
VALVE
SOUPAPE

(30) Priorität: 17.12.2010 DE 102010055046
(43) Veröffentlichungstag der Anmeldung: 23.10.2013
(73) Patentinhaber: Continental Automotive GmbH, 30165 Hannover (DE)
(72) Erfinder: MICHNIEWICZ, Daniel, 65934 Frankfurt (DE)
(86) Internationale Anmeldenummer: PCT/EP2011/072517
(87) Internationale Veröffentlichungsnummer: WO 2012/080203

(56) Entgegenhaltungen:
- US-A1- 2005 211 215

## Beschreibung

Gegenstand der Erfindung ist ein Ventil mit einem Gehäuse, einer in dem Gehäuse drehbar angeordneten Klappe, welche mit einer im Gehäuse gelagerten Antriebswelle verbunden ist, einem Elektromotor zum Antrieb der Antriebswelle, einem zumindest ein Zahnsegment aufweisendes Getriebe, welches zwischen dem Elektromotor und der Antriebswelle abgeordnet ist und einem einen Magneten aufweisenden Sensor zur Bestimmung des Drehwinkels der Klappe.

Derartige Ventile werden als Drosselklappen in Kraftfahrzeugen verwendet und sind bekannt. Zur Bestimmung des Öffnungswinkels der Klappe ist es erforderlich den Drehwinkel zu ermitteln. Hierzu werden mit Magneten arbeitende Lagesensoren verwendet. Für die Anordnung des Magneten ist es bekannt, diesen an der Antriebswelle für die Klappe oder an einem Zahnsegment des Getriebes anzuordnen. Um auch bei hohen Temperaturen und den im Motorraum vorhandenen Schwingungen eine spielfreie Befestigung des Magneten zu gewährleisten, ist es bekannt, den Magneten durch Umspritzen mit Kunststoff an einer Welle oder einem Zahnsegment zu befestigen. Hierzu wird der Magnet in die Spritzgießform für die Welle oder das Zahnsegment eingelegt und anschließend mit dem Kunststoff zum fertigen Bauteil umspritzt. Solche Spritzgießformen gestalten sich mit dem Magneten als Einlegeteil besonders aufwendig und damit kostenintensiv.

Der Erfindung liegt die Aufgabe zugrunde, ein Ventil zu schaffen, welches eine einfache und kostengünstige Anordnung eines Magneten für den Sensor erlaubt.

Die Aufgabe wird erfindungsgemäß dadurch gelöst, dass das Zahnsegment zumindest zwei Rasthaken besitzt, welche den Magneten umgreifen, und dass zumindest ein Federelement angeordnet ist, welches den Magneten gegen die Rasthaken vorspannt.

Mit der Vorspannung des Magneten durch zumindest ein Federelement gegen die Rasthaken erfolgt eine spielfreie Anordnung des Magneten im Zahnsegment, die eine zuverlässige Fixierung des Magneten im Ventil unter allen Betriebsbedingungen gewährleistet. Zudem ermöglicht die Verwendung von Federelementen einen Toleranzausgleich, was die Herstellung der Magnete und des Zahnsegments obendrein vereinfacht. Ein zusätzliches Befestigen, beispielsweise Kleben, Umspritzen ist nicht erforderlich.

Um ein Kippen des Magneten unter Belastung zuverlässig zu vermeiden, sind in einer vorteilhaften Ausgestaltung drei Rasthaken angeordnet.

Die Rasthaken können als separate Bauteile am Zahnsegment befestigt sein. Eine kostengünstige Ausgestaltung besteht jedoch darin, die Rasthaken einteilig mit dem Zahnsegment auszubilden. Insbesondere bei einem Zahnsegment als Kunststoff-Spritzgussteil lassen sich die Rasthaken mit geringem Aufwand herstellen.

In einer anderen vorteilhaften Ausgestaltung sind die Federelemente einteilig mit dem Zahnsegment ausgebildet. Durch eine gezielte Gestaltung hinsichtlich Dicke, und Länge der Federelemente lässt sich die Federkonstante gezielt auswählen, so dass die Federelemente infolge der abgestimmten Gestaltung genau an die Einsatzbedingungen angepasst werden können. Mit der Integration der Federelemente in das Zahnsegment werden zusätzlich zu montierende Bauteile vermieden.

In einer besonders einfachen Ausgestaltung besitzt das Zahnsegment eine zentrale Ausnehmung in der Abmessung des Magneten und die Federelemente sind als radial zum Mittelpunkt des Zahnsegments weisende und in die zentrale Ausnehmung hineinragende Formelemente ausgebildet.

In einer anderen Ausgestaltung ist das Federelement eine separate Feder, vorzugsweise eine Spiralfeder oder eine Blattfeder. Die Anordnung einer oder mehrerer separater Federn hat den Vorteil, dass das Zahnsegment einfacher gestaltet ist. So ermöglicht diese Ausgestaltung die Verwendung herkömmlicher Zahnsegmente ohne integrierte Federelemente.

Eine Lagesicherung des Magneten und eine Montagehilfe zur Gewährleistung der richtigen Einbaulage wird gemäß einer weiteren Ausgestaltung dadurch erreicht, dass der Magnet auf der dem Zahnsegment abgewandten Seite radial verteilte Absätze aufweist, in die die Rasthaken eingreifen. Sofern die radial verteilten Absätze größer sind als die eingreifenden Rasthaken, ermöglicht diese Ausgestaltung in radialer Richtung einen Toleranzausgleich.

An zwei Ausführungsbeispielen wird die Erfindung näher erläutert. Es zeigen in:
- Figur 1: ein Ventil,
- Figur 2: eine Draufsicht auf ein Zahnsegment,
- Figur 3: einen Schnitt des Magneten aus Figur 2 und
- Figur 4, 5: weitere Ausführungsformen des Ventils.

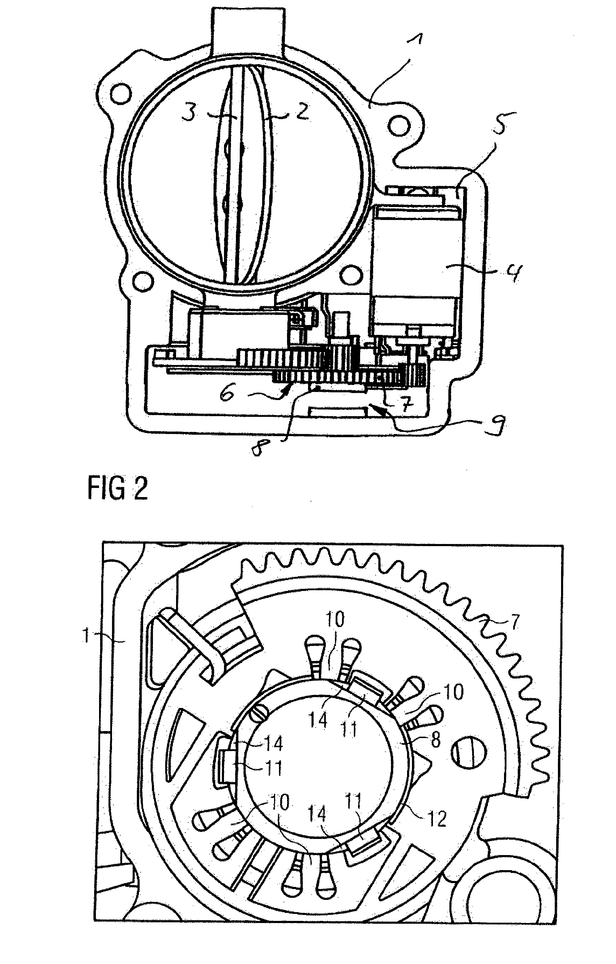

Das Ventil in Figur 1 besitzt ein Gehäuse 1, eine in dem Gehäuse 1 drehbar angeordneten Klappe 2, welche mit einer im Gehäuse 1 gelagerten Antriebswelle 3 verbunden ist. Zum Antrieb der Antriebswelle 3 ist ein Elektromotor 4 vorgesehen, der in einer separaten Kammer 5 des Gehäuses 1 angeordnet ist. Die Übertragung der Drehbewegung des Elektromotors 4 auf die Antriebswelle 3 erfolgt über ein Getriebe 6. An einem Zahnsegment 7 des Getriebes 6 ist ein Magnet 8 eines Sensors 9 zur Bestimmung des Drehwinkels der Klappe 2 angeordnet.

Figur 2 zeigt das Zahnsegment 7 des Getriebes 6 nach Figur 1 mit dem zentral angeordneten Magneten 8. Das Zahnsegment besteht aus Kunststoff und ist mittels Spritzgießen hergestellt. Der Magnet wird am Zahnsegment 7 gehalten, indem vier Federelemente 10 den Magneten gegen drei Rasthaken 11 vorspannen. Sowohl die Federelemente 10 als auch die Rasthaken 11 sind einteilig am Zahnsegment 7 ausgebildet. Während die Rasthaken 11 senkrecht zur Ebene des Zahnsegments 7 angeordnet sind, sind die Federelemente 10 radial zum Mittelpunkt des Zahnsegments 7 weisende und in die zentrale Ausnehmung 12 hineinragende Formelemente, die im Bereich des Magneten 8 jeweils einen senkrecht dazu ausgebildeten Abschnitt 13 besitzen, der in Anlage zum Magneten 8 kommt. Der Magnet 8 weist auf seiner den Rasthaken 11 zugewandten Seite radial verteilte Absätze 14 auf, in die die Rasthaken 11 eingreifen. Die Absätze 14 sind in ihren Abmessungen größer als die Rasthaken 11, so dass ein Toleranzausgleich möglich ist.

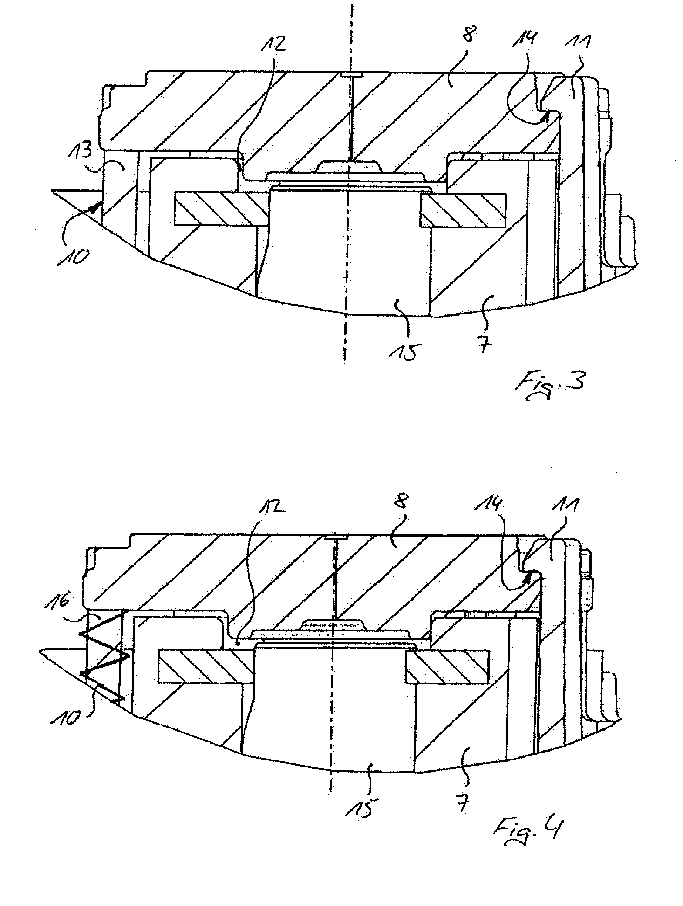

Der Schnitt gemäß Figur 3 zeigt den Magneten 8 mit einem Absatz 14, in den ein Rasthaken des Zahnsegments 7 eingreift. Die Vorspannung des Magneten 8 gegen den Rasthaken 11 erfolgt durch den senkrechten Abschnitt 13 eines Federelements 10. Das Zahnsegment 7 ist an einer Welle 15 angeordnet.

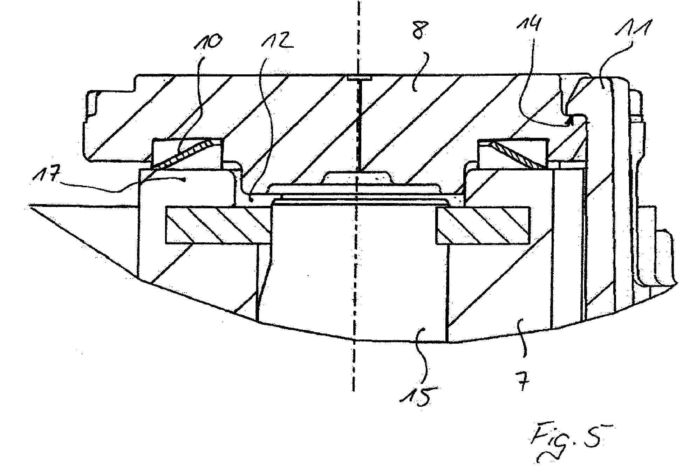

In Figur 4 sind als Federelemente 10 Spiralfedern angeordnet, wobei jede Spiralfeder 10 zur Führung einen Dom 16 besitzt. Nur ein Federelement 10 wird in einer Anordnung nach Figur 5 benötigt. Das Federelement 10 ist als Blattfeder ausgebildet. Die Blattfeder 10 stützt sich an einer Nabe 17 des Zahnsegments 7 ab und spannt den Magneten 8 gegen die Rasthaken 11 vor.

## Patentansprüche

1. Ventil mit einem Gehäuse (1), einer in dem Gehäuse (1) drehbar angeordneten Klappe (2), welche mit einer im Gehäuse (1) gelagerten Antriebswelle (3) verbunden ist, einem Elektromotor (4) zum Antrieb der Antriebswelle (3), einem zumindest ein Zahnsegment (7) aufweisendes Getriebe (6), welches zwischen dem Elektromotor (4) und der Antriebswelle (3) abgeordnet ist und einem einen Magneten (8) aufweisenden Sensor (9) zur Bestimmung des Drehwinkels der Klappe (2), **dadurch gekennzeichnet, dass** das Zahnsegment (7) zumindest zwei Rasthaken (11) besitzt, welche den Magneten (8) umgreifen, und dass zumindest ein Federelement (10) angeordnet ist, welches den Magneten (8) gegen die Rasthaken (11) vorspannt.

2. Ventil nach Anspruch 1, **dadurch gekennzeichnet, dass** drei Rasthaken (11) angeordnet sind.

3. Ventil nach Anspruch 1 oder 2, **dadurch gekennzeichnet, dass** die Rasthaken (11) einteilig mit dem Zahnsegment (7) ausgebildet sind.

4. Ventil nach Anspruch 1, **dadurch gekennzeichnet, dass** die Federelemente (10) einteilig mit dem Zahnsegment (7) ausgebildet sind.

5. Ventil nach zumindest einem der vorhergehenden Ansprüche, **dadurch gekennzeichnet, dass** das Zahnsegment (7) eine zentrale Ausnehmung (12) in der Abmessung des Magneten (8) besitzt und dass die Federelemente (10) als radial zum Mittelpunkt des Zahnsegments (7) weisende und in die zentrale Ausnehmung (12) hineinragende Formelemente ausgebildet sind.

6. Ventil nach Anspruch 1, **dadurch gekennzeichnet, dass** das Federelement (10) eine separate Feder, vorzugsweise eine Spiralfeder oder eine Blattfeder, ist.

7. Ventil nach zumindest einem der vorhergehenden Ansprüche, **dadurch gekennzeichnet, dass** der Magnet (8) auf der dem Zahnsegment (7) abgewandten Seite radial verteilte Absätze (14) aufweist, in die die Rasthaken (11) eingreifen.

8. Ventil nach Anspruch 6, **dadurch gekennzeichnet, dass** die Absätze (14) größer als die Rasthaken sind.

## Claims

1. Valve with a housing (1), a flap (2) which is arranged rotatably in the housing (1) and which is connected with a drive shaft (3) mounted in the housing (1), an electric motor (4) for driving the drive shaft (3), a gearing (6) which has at least one toothed segment (7) and which is arranged between the electric motor (4) and the drive shaft (3), and a sensor (9) which has a magnet (8) for determining the angle of rotation of the flap (2), **characterized in that** the toothed segment (7) has at least two detent hooks (11) which engage around the magnet (8), and that a spring element (10) is provided which preloads the magnet (8) against the detent hooks (11).

2. Valve according to Claim 1, **characterized in that** three detent hooks (11) are provided.

3. Valve according to Claim 1 or 2, **characterized in that** the detent hooks (11) are formed integrally with the toothed segment (7).

4. Valve according to Claim 1, **characterized in that** the spring elements (10) are formed integrally with the toothed segment (7).

5. Valve according to at least one of the preceding claims, **characterized in that** the toothed segment (7) has a central recess (12) in the dimension of the magnet (8), and that the spring elements (10) are formed as moldings pointing radially towards the middle point of the toothed segment (7) and protruding into the central recess (12).

6. Valve according to Claim 1, **characterized in that** the spring element (10) is a separate spring, preferably a coil spring or a leaf spring.

7. Valve according to at least one of the preceding claims, **characterized in that** on the side facing away from the toothed segment (7), the magnet (8) has radially distributed shoulders (14) in which the detent hooks (11) engage.

8. Valve according to Claim 6, **characterized in that** the shoulders (14) are larger than the detent hooks.

## Revendications

1. Soupape ayant un corps (1), un papillon (2) qui est monté tournant dans le corps (1) et qui est relié à un arbre (3) d'entraînement monté dans le corps (1), un moteur (4) électrique pour l'entraînement de l'arbre (3) d'entraînement, une transmission (6) qui a au moins un segment (7) denté et qui est disposée entre le moteur (4) électrique et l'arbre (3) d'entraînement et, pour la détermination de l'angle de rotation du papillon (2), un capteur (9) ayant un aimant (8), **caractérisée en ce que** le segment (7) denté a au moins deux crochets (11) d'encliquetage, qui enserrent l'aimant (8) et **en ce qu'**il y a au moins un élément (10) de ressort, qui précontraint l'aimant (8) contre les crochets (11) d'encliquetage.

2. Soupape suivant la revendication 1, **caractérisée en ce qu'**il y a trois crochets (11) d'encliquetage.

3. Soupape suivant la revendication 1 ou 2, **caractérisée en ce que** les crochets (11) d'encliquetage sont constitués d'une seule pièce avec le segment (7) denté.

4. Soupape suivant la revendication 1, **caractérisée en ce que** les éléments (10) de ressort sont constitués d'une seule pièce avec le segment (7) denté.

5. Soupape suivant au moins l'une des revendications précédentes, **caractérisée en ce que** le segment (7) denté a un évidement (12) central de la dimension de l'aimant (8) et **en ce que** les éléments (10) de ressort sont constitués sous la forme d'éléments allant radialement vers le centre du segment (7) denté et pénétrant dans l'évidement (12) central.

6. Soupape suivant la revendication 1, **caractérisée en ce qu'**élément (10) de ressort est un ressort distinct, de préférence un ressort spirale ou un ressort à lame.

7. Soupape suivant au moins l'une des revendications précédentes, **caractérisée en ce que** l'aimant (8) a, du côté éloigné du segment (7) denté, des gradins (14) dans lesquels pénètrent les crochets (11) d'encliquetage.

8. Soupape suivant la revendication 6, caractérisée en ce les gradins (14) sont plus grands que les crochets d'encliquetage.
